# EUROPEAN PATENT SPECIFICATION

(11) **EP 0 280 028 B1**
(45) Date of publication and mention of the grant of the patent: **04.08.1993**
(21) Application number: 88100697.7
(22) Date of filing: 19.01.1988
(51) Int. Cl.: G11B 7/24, G11B 7/09, G11B 7/26

(54) **An optical information disc**
Optische Informationsplatte
Disque d'information optique

(30) Priority: 27.02.1987 JP 42522/87
(43) Date of publication of application: 31.08.1988
(73) Proprietor: HITACHI, LTD., Chiyoda-ku, Tokyo 100 (JP)
(72) Inventor: Tokushuku, Nobuhiro, Totsuka-ku Yokohama-shi Kanagawa-ken (JP); Yanagihara, Hitoshi, Kamakura-shi Kanagawa-ken (JP); Hazama, Katashi, Zushi-shi Kanagawa-ken (JP); Yoshii, Masaki, Kounan-ku Yokohama-shi Kanagawa-ken (JP); Ebinuma, Naotake, Hayama-machi§Miura-gun Kanagawa-ken (JP)
(74) Representative: Altenburg, Udo, Dipl.-Phys.

(56) References cited:
- FR-A- 2 457 538
- PATENT ABSTRACTS OF JAPAN vol. 10, no. 243 (P-489)(2299) 21 August 1986, & JP-A-61 074150
- PATENT ABSTRACTS OF JAPAN vol. 10, no. 127 (P-455)(2184) 13 May 1986, & JP-A-60 251536
- JAPAN PLASTICS AGE. vol. 22, no. 197, June 1984, TOKYO JP pages 21 - 25; FUJIWARA: "Optical disc moulded with polycarbonate"

## Description

### BACKGROUND OF THE INVENTION

The present invention relates to an optical information disc which is capable to record/reproduce an information optically, especially for being capable to obtain a sufficient signal.

Two kinds of tracking servo methods are known, one of which is the continuous groove servo method, and another of which is the sample servo method as shown in USP 4,40̸2,0̸61. The continuous groove servo method has already been used in products. The sample servo method has been recently developed because of a good tracking stability.

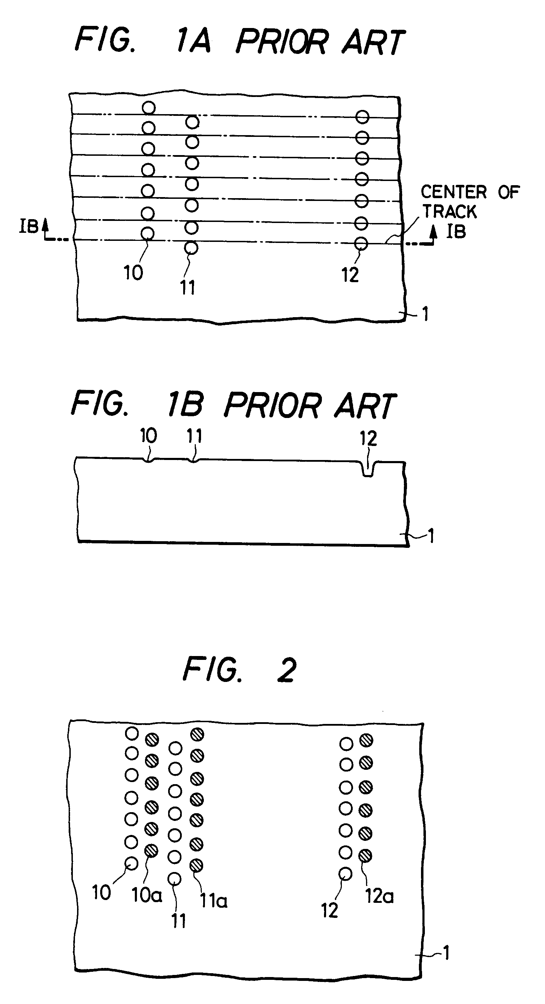

As shown in attached Figure 1A, the sample servo method does not use guiding grooves for tracking, but uses a pair of sample marks 10̸, 11 for tracking. The pair of sample marks are just located on both sides of the imaginary track with slight off-set. A center line of the imaginary track is indicated as a chain line. The accurate tracking of the imaginary track has been done by detecting each sample mark. In Figure 1A, a reference numeral 12 indicates pits for clocks. A reference numeral 1 indicates a replica base plate made of, for example, plastic. Figure 1A is a typical plane view, and Figure 1B is a typical cross view along line 1B-1B in Figure 1A. Length of each pits 10̸, 11, 12 is 90̸ ns on a time axis, which corresponds to 0̸.5 µm in case of 180̸0̸ rpm of revolution number of the optical disc, and pits located at a position of the radius of 30̸ mm of the optical disc. Optical depth of each pits 10̸, 11, 12 is λ/4, here λ is a wavelength of a laser beam for recording/reproducing, and 830̸ nm is normally used. The sample mark portions shown in Figure 1A comprise necessarily 10̸0̸0̸ to 30̸0̸0̸ portions on each imaginary track. In one embodiment, the number of the sample mark portions is selected as 1376 portions on each track. In other areas, there are sector address portions which are located 30̸ portions on each track. The remaining areas excepting the sample mark portions and sector address portions are mirror areas which are used for recording some information or data. Therefore, the area occupied by some pits of sample marks and sector address is about 10̸ % of the total area of the optical disc.

The inventors tried to manufacture the optical disc for the sample servo method by normal injection molding technique, but the ghost pits 10̸a, 11a, 12a shown in Figure 2 are produced by double transcription for the original pits 10̸, 11, 12. In the worst case, triple or quardruplex transcription has occurred. The double transcription has a bad influence on the tracking signal, and causes a problem of abnormal tracking. In Figure 2, imaginary center lines of tracks are omitted.

It is known in the art that in the moulding process the resin might flow with different speed in different areas of the stamper, which produces varying physical properties resulting in double refraction. In the Patent Abstracts of Japan, Vol. 10, No. 243 (P - 489) 〈2299〉 of August 21, 1986, it is suggested to extend the recordable area to the outer rim of the disc to achieve more uniform flow characteristics in the resin. A similar suggestion was made in Japan Plastics Age, Vol. 22, No. 197, June 1984, pages 21 - 25.

The problem which the present invention has to solve is a different one. Due to different hardening of the resin, undesired resin flow occurs in the inner and outer regions of the disc which produces, in the recordable area, the phenomenon of double transcription by ghost pits. It cannot be avoided by merely extending the recordable area.

### Summary of the Invention

An object of the present invention is to provide an optical disc with which can be obtained a good tracking signal without producing double transcription described above. The invention concerns a moulded optical information disc having a recordable area including at least one track with mirror areas between tracking mark portions along the track for recording information, each tracking mark portion including at least two pits, one slightly offset on one side of the track, the other slightly offset on the other side of the track.

In accordance with the present invention, preformatted groove areas for preventing undesired resin flow during the moulding process are located at both the inner and the outer side of the recordable area, comprising a plurality of anchoring tracks.

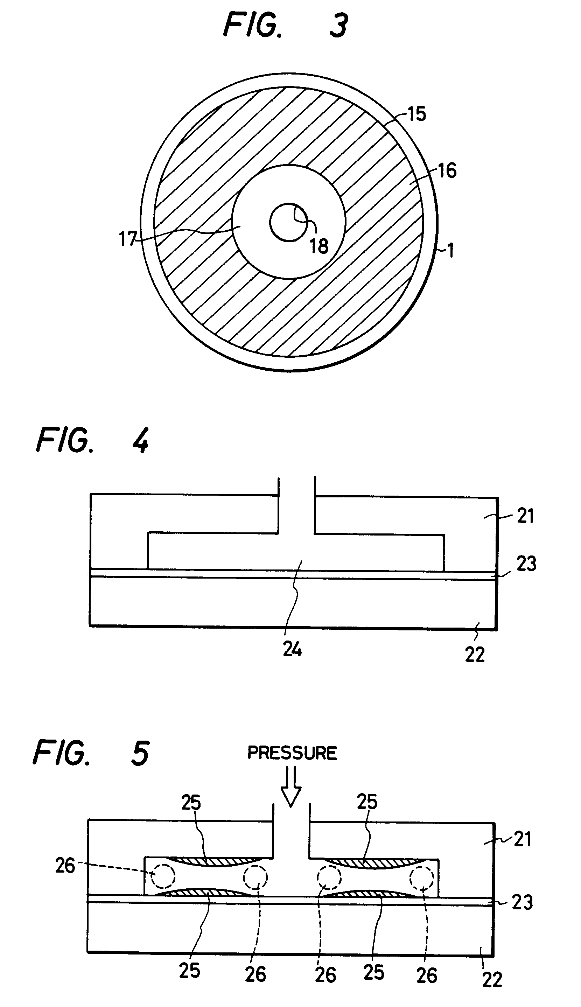

The inventors grasped the phenomenon of the double transcription, and assumed reasons thereof, and then found out that the grooves or pits provided inside and outside of the track area are effective for stopping movement of plastic resin at the time of injection molding. Figure 3 shows an imaginary plane view of an optical disc which was at first manufactured by the inventors. A reference numeral 18 indicates an inner circle of a diameter of 15 mm. A hatched portion having a reference numeral 16 indicates a sample mark area. A reference numeral 17 indicates an inner mirror area. Reference numeral 15 indicates an outer mirror area. The outer diameter of the optical disc is 130̸ mm.

When the optical disc shown in Figure 3 was manufactured by injection molding, the double transcription occurred mainly at inner and outer areas of the sample mark area 16 of the disc 1, especially at boundary areas with the inner mirror area 17 and the outer mirror area 15. This phenomenon hardly occurred at the ordinary disc having grooves or pits on the whole surface of the disc. However the phenomenon occurred at the disc for the sample servo method. As described above, the parts occupied by sample marks on the whole surface are small as about 10̸ %, the remaining parts are mirror face. Therefore, the inventors considered that, at the time of injection molding, the plastic resin moves easily, causing the double transcription to occur.

The inventors paid attention to the phenomenon that the double transcription occurred at the inner and outer areas of the sample mark area, and they considered a mechanism of of occurrence of the double transcription as follows.

Figure 4 shows an imaginary cross sectional view of a metal mold for the injection molding. Reference numerals 21 and 22 indicate the metal molds. A reference numeral 23 indicates a stamper. A reference numeral 24 indicates a cavity of the metal mold. Figure 5 shows imaginary the state at the time of injecting resin into the cavity 24 of the metal mold. After injecting, the resin begins to harden from the hatched portions having a reference numeral 25, the resin locating portions indicated by a reference numeral 26 remain comparatively in a soft state. At this state, for preventing a reverse flow of the resin through an injection aperture, a predetermined pressure is applied through the aperture as shown in Figure 5, and then movement of the resin at the portions 26 where the resin is kept soft occurs, and causes the double transcription. Since the portions 26 are located at the inner and outer area in the cavity, the double transcription has occurred at the inner and outer area of the disc. On the other hand, in case of optical disc having grooves or pits almost on the surface of the disc, the double transcription never occurred under the state shown in Figure 5. Because, slight unevennesses of the grooves or pits have a function for preventing movement of resin, even if the pressure is applied when resin is still soft, and for preventing the generation of double transcription. In case of the optical disc for the sample servo method, since sample mark pits are small, the effect for preventing the resin movement described above is very small, and the double transcription occurred.

As a result of the investigation described above, the present inventors found out that the double transcription can be prevented by forming grooves or pits at the portions 6 where the resin is kept soft, which have an effect of stopping a movement of the resin.

### BRIEF DESCRIPTION OF THE DRAWINGS

FIG. 1A illustrates a typical plane view of an optical disc using the sample servo method.

FIG. 1B illustrates a cross sectional view of FIG. 1A.

FIG. 2 illustrates a plane view of the optical disc showing double transcription of pits.

FIG. 3 illustrates an imaginary plane view of the optical disc.

FIG.4 illustrates an imaginary cross sectional view of a metal mold.

FIG. 5 illustrates a state at the time of injecting plastic resin into the metal mold shown in FIG. 4.

FIG. 6 illustrates an imaginary plane view of an optical disc of the present invention.

FIG. 7 illustrates a typical plane view of an embodiment of the present invention.

FIG. 8 illustrates a typical plane view of another embodiment of the present invention.

FIG. 9 illustrates a typical plane view of still another embodiment of the present invention.

### DETAILED DESCRIPTION OF THE PREFERRED EMBODIMENTS

An embodiment of the present invention is described hereinafter with reference to the attached drawings.

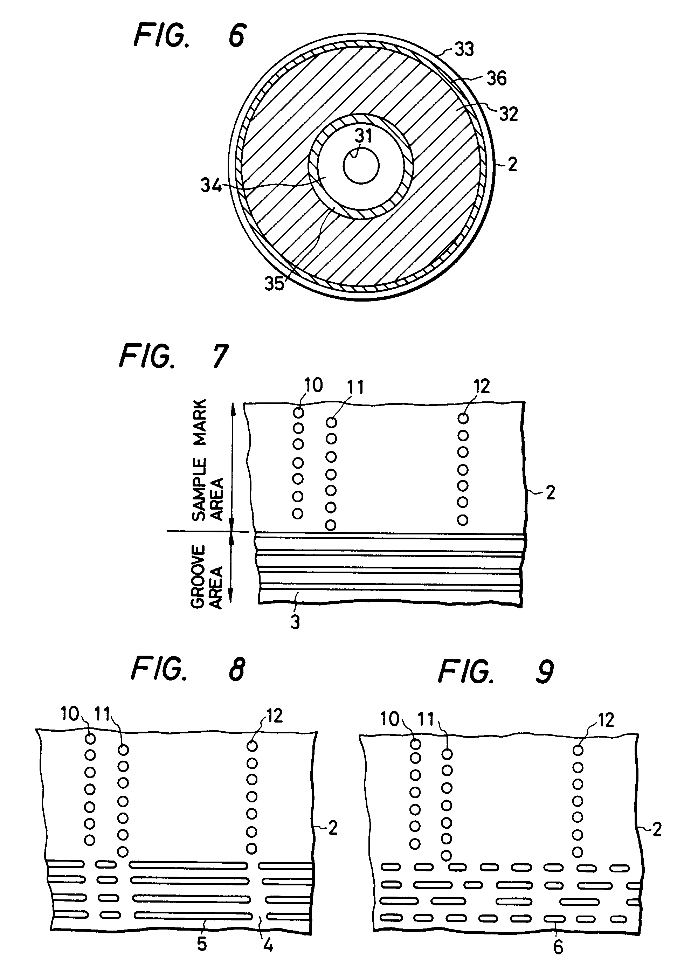

Figure 6 shows a plane view of an optical disc of an embodiment of the present invention. In Figured 6, a replica base plate 2 is made of polycarbonate. The inner diameter 31 of the replica base plate 2 is 15 mm, the outer diameter of it is 130̸ mm, and the thickness of it is 1.2 mm. A sample mark area 32 is provided from the radius of 29 mm to the radius of 61 mm. Data is recorded on the sample mark area 32. In this present invention, groove areas 35, 36 are provided adjacent to and inside and outside of the sample mark area 32 with a width of 1 mm. The reference numerals 33, 34 indicate mirror areas. Figure 7 shows an expanded plane view of a boundary portion of the sample mark area 32 and the groove area 35. In figure 7, the reference numerals 10̸, 11 indicate the sample mark pits. The reference numeral 12 indicates the clock pits. The reference numeral 2 indicates the grooves having an optical depth of about λ /4, a width of 0̸.5 µm, a pitch of 1.5 µm. In case that a light having a wavelength of 830̸ nm and the polycarbonate having an index of refraction of 1.5 are used, λ/4 corresponds to 138 nm. In the groove area, 666 lines of the grooves are existing.

The boundary portion of the sample mark area 32 and the groove area 36 is constructed as same as shown in Figure 7. The grooves provided at the inner and outer area of the sample mark area 32 cause an anchor effect at the time of injection molding. In the present embodiment, the conditions of the injection molding are a resin temperature of 340̸ °C, a temperature of the metal mold of 90̸ °C, an injection speed of 10̸0̸ mm/sec, an adding pressure of 10̸0̸ Kg/cm². These condition may be changed by kinds of injection molding machines.

Figure 8 shows another embodiment of the present invention. Instead of continuous grooves 3 shown in Figure 7, grooves 5 separated by mirror portion 4 can also be used for preventing the double transcription.

Figure 9 shows still another embodiment of the present invention. In this embodiment, a large number of pits 6 is used for preventing the double transcription.

The optical depth of the grooves is not limited only to λ /4 as described in the embodiment, but grooves having an optical depth of more that 10̸ nm can also act as the anchor at the time of the injection molding. The width of the grooves or pits is desirably selected from 0̸.1 µm to 5 µm. The track pitch is also desirably selected from 1 µm to 10̸ µm.

The space between the sample mark area and the grooves or pits area is not limited to a track pitch which is 1.5 µm, but tile space of less than 0̸.5 mm can also be act as the anchor.

The width of the grooves or pits area is not limited only to 1 mm, but a width of more than 0̸.1 mm can also act as the anchor.

The optical recording disc is manufactured by following process.

### (Laser cutting)

A photoresist layer coated on a glass plate is; irradiated by a pulse modulated laser beam. Laser cutting machines are known as shown in, for example, U.S.P. 4,456,914. The laser beam is modulated in such a way that, at the portion of the sample marks 10̸, 11, the clock pits 12, and the grooves 3, the laser beam irradiates the photoresist layer, and at the remaining portion, the laser beam does not irradiate the photoresist layer. The exposed photoresist layer is developed and removed.

### (Master and stamper)

The glass plate onwhich the photoresist layer remains partially is coated with silver or nickel. On the silver or nickel layer coated on the glass plate, a nickel layer is formed by electroforming with a thickness of about 0̸.2 mm. The electroformed nickel layer separated from the glass plate is called a master plate. On the the master plate, a nickel layer is formed by electroforming with a thickness of about 0̸.2 mm. This nickel layer separated from the master plate is called a mother plate. Several mother plates are obtained from one master plate. On the mother plate, a nickel layer is formed by electroforming. This nickel layer separated from the mother plate is called a stamper. Several stampers are obtained from one mother plate.

### (Injection molding)

The stamper is set in the metal mold for injection molding as shown in Figure 4. Molten plastic resin, for example, polycarbonate, is injected into the metal molding cavity for making a replica.

### (Optical recording medium)

On the replica, a recording layer is formed by sputtering. As materials used for the recording layer, Bi-Se-AS described in Japanese patent application No. 61-1560̸31 filed on July 4, 1986 can be used. Corresponding German patent application No. P 37 22 0̸78.0̸ was filed on July 3, 1987. Also corresponding US Patent application was filed on June 29, 1987. On the recording layer, a protective layer is coated.

According to the present invention , there can be obtained the replica base plate for the sample servo method having a good stability of tracking, because the double transcription of the sample marks can be prevented.

## Claims

1. A moulded optical information disc having a recordable area (16; 32) including at least one track with mirror areas between tracking mark portions along the track for recording information, each tracking mark portion including at least two pits (10, 11), one (10) slightly offset on one side of the track, the other (11) slightly offset on the other side of the track, characterized by preformatted groove areas (35, 36) for preventing undesired resin flow during the moulding process, located at both the inner and the outer side of the recordable area and comprising a plurality of anchoring tracks (3; 5; 6).

2. Optical information disc according to claim 1, wherein said track is a continuous groove (3).

3. Optical information disc according to claim 1, wherein said track is a groove (5) including a mirror portion (4).

4. Optical information disc according to claim 1, wherein said track is a row of pits (6).

5. Optical information disc according to claim 1, wherein the depth of said track is more than 10̸ nm.

6. Optical information disc according to claim 1, wherein the width of said track is from 0̸.1 µm to 5 µm.

7. Optical information disc according to claim 1, wherein the pitch of said tracks is from 1 µm to 10̸ µm.

8. Optical information disc according to claim 1, wherein the width of said groove area (35, 36)is more than 0̸.1 mm.

## Patentansprüche

1. Geformte optische Informationsplatte, die einen aufzeichenbaren Bereich (16, 32) hat, der zumindest eine Spur mit Spiegelbereichen zwischen Nachführmarken-Abschnitten längs der Spur zum Aufzeichnen von Information aufweist, wobei jeder Nachführmarken-Abschnitt zumindest 2 Pit (10, 11), von denen einer (10) leicht auf eine Seite der Spur versetzt ist, und von denen der andere (11) leicht auf die andere Seite der Spur versetzt ist, aufweist, gekennzeichnet durch vorformatierte Rillenbereiche (35, 36) zum Verhindern unerwünschten Harzflußes während dem Formprozeß, die sowohl an der inneren als auch der äußeren Seite des aufzeichenbaren Bereiches angeordnet sind, und die eine Vielzahl von Verankerungsspuren (3; 5; 6) aufweisen.

2. Optische Informationsplatte gemäß` Anspruch 1, worin die Spur eine kontinuierliche Rille (3) ist.

3. Optische Informationsplatte gemäß Anspruch 1, worin die Spur eine Rille (5) ist, die einen Spiegelabschnitt (4) aufweist.

4. Optische Informationsplatte gemäß Anspruch 1, worin die Spur eine Reihe von Pit (6) ist.

5. Optische Informationsplatte gemäß Anspruch 1, worin die Tiefe der Spur mehr als 10 nm ist.

6. Optische Informationsplatte gemäß Anspruch 1, worin die Breite der Spur von 0,1 µm bis 5 µm ist.

7. Optische Informationsplatte gemaß Anspruch 1, worin der Abstand der Spuren von 1 µm bis 10 µm ist.

8. Optische Informationsplatte gemaß Anspruch 1, worin die Breite des Rillenbereiches (35, 36) mehr als 0,1 mm ist.

## Revendications

1. Disque d'information optique moulé ayant une zone d'enregistrement (16; 32) contenant au moins une piste avec des zones réflectrices entre des parties de marque de traçage le long de la piste pour enregistrer de l'information, chaque partie de marque de traçage contenant au moins deux piqûres (10, 11), dont une (10) se trouve légèrement décalée d'un côté de la piste et l'autre (11) se trouve légèrement décalée de l'autre côté de la piste,
**caractérisé** par
des zones de rainure (35, 36) préformatées pour éviter l'écoulement de résine indésirable durant le processus de moulage, et se trouvant aussi bien du côté intérieur que du côté extérieur de la zone d'enregistrement et comprenant une pluralité de pistes d'ancrage (3; 5; 6).

2. Disque d'information optique selon la revendication 1, dans lequel ladite piste est une rainure continue (3).

3. Disque d'information optique selon la revendication 1, dans lequel ladite piste est une rainure (5) contenant une partie réflectrice (4).

4. Disque d'information optique selon la revendication 1, dans lequel ladite piste est une rangé de piqûres (6).

5. Disque d'information optique selon la revendication 1, dans lequel la profondeur de ladite piste est plus de 10 nm.

6. Disque d'information selon la revendication 1, dans lequel la largeur de ladite piste est de 0,1 µm à 5 µm.

7. Disque d'information selon la revendication 1, dans lequel le pas desdites pistes est de 1 µm à 10 µm.

8. Disque d'information selon la revendication 1, dans lequel la largeur de ladite zone de rainure (35, 36) est plus de 0,1 mm.
